(19) Europäisches Patentamt
European Patent Office
Office européen des brevets

(11) **EP 1 649 192 B1**

(12) **EUROPÄISCHE PATENTSCHRIFT**

(45) Veröffentlichungstag und Bekanntmachung des Hinweises auf die Patenterteilung:
**23.04.2008 Patentblatt 2008/17**

(21) Anmeldenummer: 04763482.9

(22) Anmeldetag: **24.07.2004**

(51) Int Cl.:
*F16H 3/00* (2006.01)          *F16H 3/093* (2006.01)

(86) Internationale Anmeldenummer:
**PCT/EP2004/008324**

(87) Internationale Veröffentlichungsnummer:
**WO 2005/012762 (10.02.2005 Gazette 2005/06)**

(54) **DOPPELKUPPLUNGSGETRIEBE MIT KOAXIALEM ANTRIEB UND ABTRIEB**

TWIN CLUTCH TRANSMISSION WITH COAXIAL DRIVE AND OUTPUT

BOITE DE VITESSES A DOUBLE EMBRAYAGE COMPRENANT UNE ENTREE ET UNE SORTIE COAXIALES

(84) Benannte Vertragsstaaten:
**DE FR GB IT SE**

(30) Priorität: **01.08.2003 DE 10335262**

(43) Veröffentlichungstag der Anmeldung:
**26.04.2006 Patentblatt 2006/17**

(73) Patentinhaber: **Daimler AG**
**70327 Stuttgart (DE)**

(72) Erfinder: **GITT, Carsten**
**70327 Stuttgart (DE)**

(74) Vertreter: **Bergemann, Holger Dirk**
**Daimler AG**
**Intellectual Property Management**
**IPM, C 106**
**70546 Stuttgart (DE)**

(56) Entgegenhaltungen:
**EP-A- 0 278 938          EP-A- 0 354 890**
**DE-A- 3 131 139          DE-A- 10 102 028**
**US-A- 4 463 621**

## Beschreibung

Die Erfindung betrifft ein Doppelkupplungsgetriebe gemäß dem Oberbegriff von Patentanspruch 1 und wie aus der EP 0 278 938 bekannt.

Aus der DE 101 02 028 A1 ist bereits ein Doppelkupplungsgetriebe bekann, bei dem die Getriebeeingangswelle und die Getriebeausgangswelle koaxial zueinander angeordnet sind. Die den beiden Teilgetrieben zugeordneten Vorgelegewellen sich parallel zueinander angeordnet.

Ferner sind aus der DE 31 31 156 A1 Doppelkupplungsgetriebe bekannt, bei denen eine Getriebeeingangswelle und eine Getriebeausgangswelle koaxial zueinander angeordnet sind. Das Doppelkupplungsgetriebe weist neben sechs Vorwärtsgängen mehrere Rückwärtsgänge auf.

Die nicht vorveröffentlichte DE 103 25 647.4 zeigt ein Doppelkupplungsgetriebe, bei welchem in Übereinstimmung mit der Erfindung:

- eine Getriebeeingangswelle und eine Getriebeausgangswelle koaxial zueinander angeordnet sind,
- zwei Vorgelegewellen parallel versetzt zueinander und zur Getriebeeingangs und -ausgangswelle angeordnet sind,
- ein direkter Gang vorgesehen ist,
- ansonsten sämtliche geraden Vorwärtsgänge ausschließlich der einen Vorgelegewelle und sämtliche ungeraden Vorwärtsgänge ausschließlich der anderen Vorgelegewelle zugeordnet sind,
- koaxial auf der Getriebeausgangswelle axial versetzt zu einer dem direkten und einem weiteren Vorwärtsgang zugeordneten Schaltmuffe eine weitere zwei Vorwärtsgängen zugeordnete Schaltmuffe angeordnet ist,
- wobei axial versetzt zu den beiden besagten Schaltmuffen eine Schaltmuffenebene liegt, in der zwei weitere Schaltmuffen angeordnet sind, von denen jede jeweils einer der beiden Vorgelegewellen zugeordnet ist.

Im Gegensatz zur Erfindung verläuft bei diesem Doppelkupplungsgetriebe ein Vorwärtsgang über vier Übersetzungsstufen.

Aufgabe der Erfindung ist es, ein in jeder Dimension kompaktes Doppelkupplungsgetriebe für Fahrzeug mit einem in Fahrtrichtung längs eingebauten Antriebsmotor zu schaffen, welches einen hohen Wirkungsgrad aufweist.

Doppelkupplungsgetriebe mit koaxialer Eingangswelle und Getriebeausgangswelle können in besonders vorteilhafter Weise im Zusammenhang mit längs eingebautem Antriebsmotor Anwendung finden. Antriebsstränge mit längs eingebautem Antriebsmotor haben den Vorteil, dass diese in Fahrzeugen mit hohen Drehmomenten eingebaut werden können. Zumeist folgt dem Getriebe eine Gelenkwelle, welche das Antriebsmoment über ein Hinterachsgetriebe auf eine Hinterachse überträgt. Bei Nutzfahrzeugen und Allrad-PKW wird optional über ein Verteilergetriebe das Antriebsmoment vom Längs-Antriebsmotor-Getriebe-Verband auf zumindest eine weitere Fahrzeugachse übertragen. Damit findet das erfindungsgemäße Doppelkupplungsgetriebe vorrangig Anwendung in Personenkraftwagen der Luxusklasse und Nutzfahrzeugen.

Die koaxiale Bauweise von Getriebeeingangswelle und Getriebeausgangswelle ermöglicht es in besonders vorteilhafter Weise, die Fahrzeuge je nach Kundenwunsch alternativ mit dem erfindungsgemäßen Doppelkupplungsgetriebe oder einem Planetenautomatikgetriebe auszustatten, dessen Ein- und Ausgangswelle prinzipbedingt koaxial liegen. Es kann demzufolge in besonders vorteilhafter Weise die Teilevielfalt der Fahrzeugvarianten gering gehalten werden.

Ein weiterer Vorteil der Erfindung ergibt sich aus der parallel versetzten Anordnung der beiden Vorgelegewellen, die eine axial kürzere Bauweise des Getriebes ermöglicht, als die koaxialen Bauweise der beiden Vorgelegewellen, wie diese beispielsweise in der EP 1 141 580 A1 gezeigt ist. Somit baut das erfindungsgemäße Doppelkupplungsgetriebe trotz der zusätzlichen Kupplung axial nicht länger, als ein Handschaltgetriebe mit nur einer Anfahr- und Schaltkupplung. Es ist sogar möglich, das Doppelkupplungsgetriebe, welches gegenüber dem Handschaltgetriebe den Vorteil der Lastschaltbarkeit hat, genauso kurz oder sogar noch kürzer, als ein Handschaltgetriebe mit gleicher Anzahl von Vorwärtsgängen zu bauen und dennoch zusätzliche Rückwärtsgänge vorzusehen, was insbesondere bei Nutzfahrzeugen von Vorteil ist. Ferner besteht die Möglichkeit bei Verwendung des prinzipiell gleichen Grundgetriebes je nach Kundenwunsch optional einige Doppelkupplungsgetriebe mit einem Rückwärtsgang und den Rest der Doppelkupplungsgetriebe mit mehreren Rückwärtsgängen auszustatten. Dieses Baukastensystem bringt Kostenvorteile mit sich.

Insbesondere im Vergleich zu Doppelkupplungsgetrieben mit parallel versetzten Vorgelegewellen, die koaxial zu der jeweiligen Kupplung angeordnet sind, wie dies beispielsweise in der DE 199 39 334 A1 oder der DE 101 02 028 A1 Fig. 12 gezeigt ist, ergibt sich mit der Erfindung der Vorteil einer schmalen Bauweise des Getriebes. Damit kann das erfindungsgemäße Doppelkupplungsgetriebe im Gegensatz zum Doppelkupplungsgetriebe gemäß DE 199 39 334 A1 in besonders vorteilhafter Weise Anwendung in Fahrzeugen mit engen Fahrzeugtunneln oder mit geringer Bodenfreiheit finden.

Gegenüber anderen verhältnismäßig kompakt bauenden Doppelkupplungsgetrieben mit koaxialem Getriebeeingang und Getriebeausgang, wie ein solches beispielsweise in der DE 101 02 028 A1 Fig. 1 gezeigt ist, weist das erfindungsgemäße Doppelkupplungsgetriebe einen direkten Gang auf. Dieser kann in besonders vorteilhafter Weise lastschaltbar ausgeführt sein. Der direkte Gang hat infolge des Verzichts auf Verzahnungseingriffe zur Drehmomentübertragung einen besonders guten Wirkungsgrad. Der Wirkungsgrad ist beim erfindungsgemäßen Doppelkupplungsgetriebe darüber hinausgehend hoch, da der Kraftfluss der übrigen Vorwärtsgange lediglich über zwei Verzahnungspaarungen verläuft.

In besonders vorteilhafter Weise kann zumindest ein Rückwärtsgang über beide Vorgelegewellen verlaufen. Somit kann Bauraum gespart werden. Es können mit nur geringem bis keinem zusätzlichen Bauraumaufwand mehrere Rückwärtsgänge verwirklicht werden.

Die erfindungsgemäße Anordnung der Schaltmuffen ermöglicht in besonders vorteilhafter Weise bei optimaler Ausnutzung von vier Schaltmuffen sieben Vorwärtsgänge und zumindest zwei Rückwärtsgänge. Die in dem Patentanspruch 1 aufgeführte versetzte Anordnung der vier Schaltmuffen erlaubt ferner einen kompakten Aufbau des Doppelkupplungsgetriebes sowohl in axialer Richtung als auch quer dazu.

Das erfindungsgemäße Doppelkupplungsgetriebe kann in besonders vorteilhafter Weise progressiv oder zumindest näherungsweise progressiv abgestuft sein.

In besonders vorteilhafter Weise können sämtliche Vorwärtsgänge sequentiell unter Last schaltbar ausgeführt sein. Je nach Ausführung des Radsatzes kann das Umschalten zwischen dem ersten Vorwärts- und dem ersten Rückwärts-Gang allein durch wechselweises Schließen der beiden Kupplungen des Doppelkupplungsgetriebes erfolgen, ohne dass dabei eine Schaltmuffe betätigt werden muss. Dies ist besonders günstig im Hinblick auf kurze Übergangszeiten vom Rückwärtsgang in den ersten Vorwärtsgang, die neben dem Rangieren beispielsweise für ein "Freischaukeln" des festgefahrenen Fahrzeuges vorteilhaft sind. Beim "Freischaukeln" bzw. "rocking-cycle" wird das Fahrzeug kurz vor- und zurückgefahren, um mit Schwung beispielsweise aus einer Sandkuhle zu kommen. Demzufolge wird die Trägheit der Fahrzeug- und Beladungsmasse genutzt, um den eventuell schlecht greifenden Antrieb der Antriebsräder zu unterstützen. In diesem Zusammenhang erweist sich ein Doppelkupplungsgetriebe als besonders vorteilhaft, da dieses vollautomatisch ausgestaltet sein kann. Demzufolge kann auch ein vollautomatischer "Freischaukelbetrieb" vorgesehen sein. Zusätzlich kann neben der vollautomatischen Betriebsweise auch die halbautomatisch Betriebsweise vorgesehen sein, bei welcher der Gangwechsel vom Fahrzeugführer direkt vorgegeben wird. Dieser Gangwechsel wird dann selbsttätig ausgeführt, wenn entsprechende Randbedingungen erfüllt sind. Diese Randbedingungen sind beispielsweise

- die Einhaltung der maximal und der minimal zulässige Antriebsmotordrehzahl,
- ein Fahrzeugstabilitätsprogramm, wie beispielsweise ein elektronisches Stabilitätsprogramm ESP oder ein Antiblockiersystem ABS oder eine Antischlupfregelung ASR ist inaktiv.

In besonders vorteilhafter Weise kann jeweils mindestens ein Zahnrad doppelt belegt sein. D.h., das Zahnrad befindet sich in mindestens zwei Gangstufen im aktiven Drehmomentenpfad.

Eine Umkehrwelle, mit der die Drehrichtung für den Rückwärtsgang umgekehrt wird, kann in besonders vorteilhafter Weise mehrere - insbesondere zwei - Zahnräder tragen. Diese Zahnräder können insbesondere als Festräder ausgestaltet sein.

Weitere Vorteile der Erfindung gehen aus den weiteren Patentansprüchen, der Beschreibung und der Zeichnung vor.

Die Erfindung ist nachfolgend anhand von drei Ausführungsbeispielen in der Zeichnung dargestellt.

Dabei zeigen:

Fig. 1 schematisch ein Getriebeschema eines Doppelkupplungsgetriebes in einer ersten Ausführungsform der Erfindung,

Fig. 2 eine Tabelle der Schaltzustände der Kupplungen und Schaltmuffen des Doppelkupplungsgetriebes gemäß Fig. 1,

Fig. 3 schematisch ein Getriebeschema eines Doppelkupplungsgetriebes in einer zweiten Ausführungsform der Erfindung,

Fig. 4 eine Tabelle der Schaltzustände der Kupplungen und Schaltmuffen des Doppelkupplungsgetriebes gemäß Fig. 3,

Fig. 5 schematisch ein Getriebeschema eines Doppelkupplungsgetriebes in einer dritten Ausführungsform der Erfindung und

Fig. 6 eine Tabelle der Schaltzustände der Kupplungen und Schaltmuffen des Doppelkupplungsgetriebes gemäß Fig. 5.

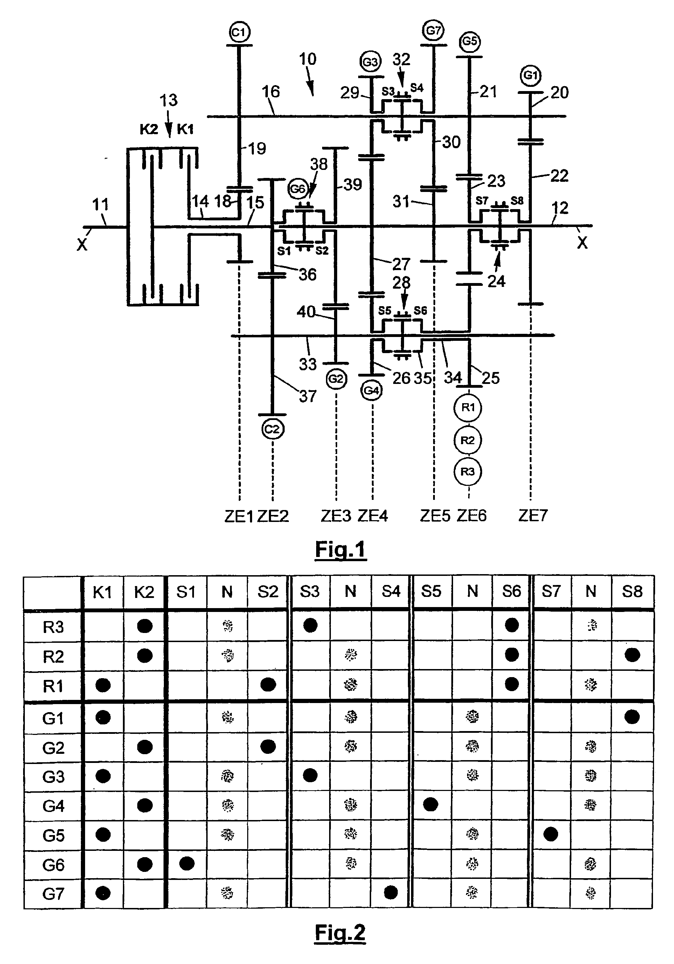

Ein erfindungsgemäßes Doppelkupplungsgetriebe 10 gemäß Fig. 1 findet Einsatz in einem Antriebsstrang eines Kraftfahrzeuges. Hierbei ist das Doppelkupplungsgetriebe 10 zwischen einem Antriebsmotor und einer Abtriebswelle, beispielsweise eine Gelenk- oder Kardanwelle, zwischengeschaltet. Vorzugsweise handelt es sich um einen Standardantriebsstrang mit einem Antriebsmotor, welcher im Front-Längseinbau angeordnet ist, und mit Heckantrieb. Ebenso gehört ein Mehrachsantrieb zur bevorzugten Ausführungsform der Erfindung. Dieser Mehrachsantrieb kann sowohl mittels einer zur Vorderachse geführten Seitenwelle ausgeführt sein, wie dies beispielsweise aus der EP 1 321 327 A2 bekannt ist. Ferner kann der Mehrachsantrieb mit einer Durchtriebsachse ausgeführt sein, wie dies von schweren Nutzfahrzeugen bekannt ist.

Das Doppelkupplungsgetriebe weist eine Eingangswelle 11,

- insbesondere eine Kurbelwelle oder
- eine mit dieser umlaufende Welle, oder

- ein Zweimassenschwungrad oder
- eine flexible Mitnehmerscheibe,

sowie eine Getriebeausgangswelle 12 auf. Die Eingangswelle 11 und Getriebeausgangswelle 12 sind koaxial zu einer Getriebeachse X-X angeordnet. Die Eingangswelle 11 ist, ggf. unter Zwischenschaltung mindestens einer weiteren Getriebestufe, mit dem Antriebsmotor verbunden. Die Getriebeausgangswelle 12 ist, ggf. unter Zwischenschaltung mindestens einer weiteren Getriebestufe, mit Fahrzeugrädern verbunden.

Im folgenden werden die Ausdrücke:

- "vorne" und "hinten",
- "erste bis siebente Zahnradebene" und
- "obere Vorgelegewelle" und "untere Vorgelegewelle"

verwendet.

"Vorne" ist dabei die bei Vorwärtsfahrt des Kraftfahrzeugs nach vorne weisende Richtung, wohingegen "hinten" entsprechend die entgegengesetzte Richtung ist. In der Zeichnung ist "vorne" links und "hinten" rechts dargestellt.

Die "erste bis siebente Zahnradebene" zählt dabei von vorne nach hinten.

Eine Zahnradebene ist eine Ebene, in der zumindest zwei miteinander kämmende Zahnräder angeordnet sind. Bei der praktischen Umsetzung der dargestellten Getriebeschemata kann es insbesondere in dem Fall, dass drei Zahnräder in einer Zahnradebene miteinander kämmen, sein, dass die Zahnräder aus Bauraum- oder Dimensionierungsgründen nicht exakt in einer Ebene angeordnet sein. Ein solcher Grund wären beispielsweise unterschiedliche Zahnbreiten auf den beiden Vorgelegewellen, die in unterschiedlichen zu übertragenden Drehmomenten begründet sind.

Der im Zusammenhang mit der Erfindung verwendete Ausdruck Schaltmuffenebene bedeutet hier, dass sich in einer Ebene zumindest eine Schaltmuffe befindet. Bei der praktischen Umsetzung der dargestellten Getriebeschemata kann es insbesondere in dem Fall, dass sich zumindest zwei Schaltmuffen in einer Schaltmuffeneben befinden, sein, dass die Schaltmuffen aus Bauraumgründen nicht exakt in einer Ebene angeordnet sein. Der Bauraum kann beispielsweise durch die Einbaulage einer Schaltaktuatorik zur Verschiebung der Schaltmuffen zwecks eines Gangwechsels vorgegeben sein.

Die Verwendung der Ausdrücke "obere Vorgelegewelle" und "untere Vorgelegewelle" dient lediglich der Orientierung in der Zeichnung und ist nicht als den Schutzumfang einschränkend aufzufassen. Die Anordnung der drei zueinander parallelen Wellen:

- Eingangswelle und
- zwei Vorgelegewellen

kann dabei räumlich im Dreieck oder aber in einer Ebene erfolgen.

Die Eingangswelle 11 steht in Antriebsverbindung mit einer hier als eine Baueinheit ausgebildeten Doppelkupplung 13. Die Doppelkupplung 13 verfügt über eine Kupplung K1 sowie eine Kupplung K2, welche über geeignete, nicht dargestellte Einrichtungen und unter Gewährleistung einer geeigneten Überschneidungssteuerung das Antriebsmoment der Eingangswelle 11 für geschlossene Kupplung K2 auf eine Zwischenwelle 14 übertragen und für geschlossene Kupplung K1 auf eine Zwischenwelle 15 übertragen. Die Kupplung K1 ist in Richtung der Getriebeachse X-X (im Folgenden "in axialer Richtung") auf der dem Antriebsmotor abgewandten Seite der Kupplung K2 angeordnet. Die Zwischenwelle 14 ist als Hohlwelle ausgebildet und ist radial innenliegend von der Zwischenwelle 15 durchdrungen. In dem der Doppelkupplung 13 abgewandten Endbereich der Zwischenwelle 14 erfolgt die Übergabe eines Antriebsmomentes von der Zwischenwelle 14 auf eine Vorgelegewelle 16 über eine Konstante C1, welche eine Eingangsübersetzung bildet und über ein mit der Zwischenwelle 14 drehfest verbundenes Antriebszahnrad 18 sowie ein drehfest mit der Vorgelegewelle 16 verbundenes Abtriebszahnrad 19 verfügt. Das Antriebszahnrad 18 und das Abtriebszahnrad 19 liegen in einer ersten Zahnradebene ZE1.

Drehfest mit der Vorgelegewelle 16 verbunden ist ein Festrad 20 einer Vorwärtsgangstufe G1 und ein Festrad 21 einer Vorwärtsgangstufe G5. Das Festrad 20 kämmt in einer siebenten Zahnradebene ZE7 mit einem Losrad 22, welches koaxial auf der Getriebeausgangswelle 12 angeordnet ist. Das Festrad 21 kämmt in einer sechsten Zahnradebene ZE6 mit einem Losrad 23, welches koaxial auf der Getriebeausgangswelle 12 und axial benachbart vor dem Losrad 22 angeordnet ist. Axial zwischen den beiden Losrädern 22 und 23 ist eine erste Schaltmuffe 24 angeordnet, welche axial nach vorne in eine Stellung S7 geschoben werden kann, so dass diese eine drehfeste Verbindung zwischen dem Losrad 23 und der Getriebeausgangswelle 12 herstellt. Wird die erste Schaltmuffe 24 hingegen axial nach hinten in eine Stellung S8 geschoben, so stellt die Schaltmuffe 24 eine drehfeste Verbindung zwischen dem Losrad 22 und der Getriebeausgangswelle 12 her.

In der sechsten Zahnradebene ZE6 liegt auch ein Losrad 25, welches koaxial auf der unteren Vorgelegewelle 33 liegt und drei Rückwärtsgängen R1, R2 und R3 zugeordnet ist. Dieses Losrad 25 kämmt über ein - nicht näher dargestelltes - in der sechsten Zahnradebene ZE6 befindliches Zwischenrad mit dem Losrad 23.

Axial benachbart vor dem Losrad 25 liegt in einer vierten Zahnradebene ZE4 ein dem vierten Vorwärtsgang G4 zugeordnetes Losrad 26. Dieses Losrad 26 kämmt mit einem Festrad 27, welches in der vierten Zahnradebene ZE4 drehfest mit der Getriebeausgangswelle 12 verbunden ist. Axial zwischen den beiden Losrädern 25 und 26 ist eine zweite Schaltmuffe 28 angeordnet, welche axial nach vorne in eine Stellung S5 geschoben werden kann, so dass diese eine drehfeste Verbindung zwischen dem Losrad 26 und der Vorgelegewelle 33 herstellt. Wird die zweite Schaltmuffe 28 hingegen axial nach hinten in eine Stellung S6 geschoben, so stellt die Schaltmuffe 28 eine drehfeste Verbindung zwischen dem Losrad 25 und der unteren Vorgelegewelle 33 her.

In der besagten dem dritten Vorwärtsgang G3 zugeordnete vierte Zahnradebene ZE4 ist auch der vierte Vorwärtsgang G4 angeordnet. Dabei kämmt ein dem dritten Vorwärtsgang G3 zugeordnetes Losrad 29 mit dem Festrad 27 auf der Getriebeausgangswelle 12. Axial benachbart hinter diesem Losrad 29 liegt das Losrad 30, welches dem siebenten Vorwärtsgang G7 zugeordnet ist und in einer fünften Zahnradebene ZE5 liegt. Dieses Losrad 30 kämmt mit einem ebenfalls in der fünften Zahnradebene ZE5 liegendem Losrad 31. Axial zwischen dem Losrad 29 des dritten Vorwärtsganges G3 und dem Losrad 30 des siebenten Vorwärtsganges liegt eine dritte Schaltmuffe 32. Die Schaltmuffe 32 kann nach vorne in eine Stellung S3 geschoben werden, so dass diese eine drehfeste Verbindung zwischen dem Losrad 29 und der Vorgelegewelle 16 herstellt. Wird die dritte Schaltmuffe 32 hingegen axial nach hinten in eine Stellung S4 geschoben, so stellt die Schaltmuffe 32 eine drehfeste Verbindung zwischen dem Losrad 30 und der Vorgelegewelle 16 her.

Da somit im axialen Bauraum zwischen dem Losrad 25 der drei Rückwärtsgänge R1, R2, R3 und dem Losrad 26 des vierten Vorwärtsganges G4 neben der zweiten Schaltmuffe 28 auch noch Platz für die fünfte Zahnradebene ZE5 vorgehalten werden muss, weist das Losrad 25 eine ringförmige Verlängerung 34 zu dessen Schaltverzahnung 35 auf.

Axial vor einer dritten Zahnradebene ZE3 liegt eine zweite Zahnradebene ZE2 der zweiten Getriebekonstanten C2. Diese zweite Getriebekonstante C2 umfasst:

- ein Antriebszahnrad 36, welches drehfest mit dem hinteren Ende der Zwischenwelle 15 verbunden ist und
- ein Abtriebszahnrad 37, welches drehfest am vorderen Ende der Vorgelegewelle 33 angeordnet ist.

Axial zwischen dem Antriebszahnrad 36 der zweiten Getriebekonstanten C2 und dem Losrad des zweiten Ganges G2 liegt der direkte Gang G6, dessen Übersetzungsverhältnis 1:1 zwischen dem Übersetzungsverhältnis des fünften Ganges G5 und dem Übersetzungsverhältnis des siebenten Ganges G7 liegt. Örtlich vor dem direkten Gang G6 ist die Getriebeausgangswelle 12 drehbar in einer zentralen Bohrung der Zwischenwelle 15 gelagert. Somit ist die Getriebeausgangswelle 12 drehbar gegenüber der Zwischenwelle 15, solange sich eine Schaltmuffe 38 des direkten Ganges G6 nicht in einer vorderen Stellung S1 befindet. In dieser vorderen Stellung S1 stellt die Schaltmuffe 38 eine drehfeste Verbindung zwischen der Zwischenwelle 15 und der Getriebeausgangswelle 12 her.

In einer hinteren Stellung S2 stellt die Schaltmuffe 38 eine drehfeste Verbindung zwischen der Getriebeausgangswelle 12 und einem Losrad 39, welches koaxial zur Getriebeausgangswelle gelagert ist, her. Dieses Losrad 39 ist in der dritten Zahnradebene ZE3 angeordnet und kämmt mit einem dem zweiten Vorwärtsgang G2 zugeordneten Festrad 40, welches drehfest mit der Vorgelegewelle 33 verbunden ist.

In den Zahnrad- und Schaltelementebenen, welche quer (im Folgenden "radial") zur Getriebeachse X-X orientiert sind, sind somit in der folgenden Reihenfolge axial von vorne nach hinten hintereinanderliegend angeordnet:

- in der ersten Zahnradebene ZE1 die der ersten Kupplung K1 zugeordnete Getriebekonstante C1 mit Antriebszahnrad 18 und Abtriebszahnrad 19,
- in der zweiten Zahnradebene ZE2 die der zweiten Kupplung K2 zugeordnete zweite Getriebekonstante C2 mit Antriebszahnrad 36 und Abtriebszahnrad 37,
- in der ersten Schaltmuffenebene das Schaltelement 38 des direkten Ganges G6 und des zweiten Vorwärtsganges G2,
- in der dritten Zahnradebene ZE3 die Zahnräder des zweiten Vorwärtsganges G2
- in der vierten Zahnradebene ZE4 die Zahnräder des dritten Vorwärtsganges G3 und vierten Vorwärtsganges G4,
- in der zweiten Schaltmuffenebene die beiden Schaltmuffen 28, 32, welche auf den Vorgelegewellen 33, 16 angeordnet sind und den Vorwärtsgängen G4, G3, G7 und den Rückwärtsgängen R1, R2, R3, zugeordnet sind,
- in der fünften Zahnradebene ZE5 die beiden Zahnräder des siebenten Vorwärtsganges G7,
- in der sechsten Zahnradebene ZE6 die Zahnräder des fünften Vorwärtsganges G5, und der drei Rückwärtsgänge R1, R2 und R3,
- in der dritten Schaltmuffenebene eine Schaltmuffe 24 für den fünften Getriebegang G5, die drei Rückwärtsgänge R1, R2, R3 und den ersten Getriebegang G1 und
- in der siebenten Zahnradebene ZE7 die Zahnräder für den siebenten Gang.

Fig. 2 zeigt eine Tabelle der Schaltzustände der beiden Kupplungen K1, K2 und vier Schaltelemente 38, 32, 28, 24 des Doppelkupplungsgetriebes 10 gemäß Fig. 1.

Im ersten Vorwärtsgang G1 verläuft der Drehmomentenpfad über die eingerückte erste Kupplung K1. Die zweite Kupplung K2 ist ausgerückt. Die Schaltmuffe 24 befindet sich in der hinteren Stellung S8. Alle übrigen Schaltmuffen befinden sich in einer Neutralstellung N.

Im zweiten Vorwärtsgang G2 verläuft der Drehmomentenpfad über die eingerückte zweite Kupplung K2. Die erste Kupplung K1 ist ausgerückt. Die Schaltmuffe 38 befindet sich in der hinteren Stellung S2. Alle übrigen Schaltmuffen befinden sich in einer Neutralstellung N.

Im dritten Vorwärtsgang G3 verläuft der Drehmomentenpfad über die eingerückte erste Kupplung K1. Die zweite Kupplung K2 ist ausgerückt. Die Schaltmuffe 32 befindet sich in der vorderen Stellung S3. Alle übrigen Schaltmuffen befinden sich in einer Neutralstellung N.

Im vierten Vorwärtsgang G4 verläuft der Drehmomentenpfad über die eingerückte zweite Kupplung K2. Die erste Kupplung K1 ist ausgerückt. Die Schaltmuffe 28 befindet sich in der vorderen Stellung S5. Alle übrigen Schaltmuffen befinden sich in einer Neutralstellung N.

Im fünften Vorwärtsgang G5 verläuft der Drehmomentenpfad über die eingerückte erste Kupplung K1. Die zweite Kupplung K2 ist ausgerückt. Die Schaltmuffe 24 befindet sich in der vorderen Stellung S7. Alle übrigen Schaltmuffen befinden sich in einer Neutralstellung N.

Im sechsten Vorwärtsgang G6 verläuft der Drehmomentenpfad über die eingerückte zweite Kupplung K2. Die erste Kupplung K1 ist ausgerückt. Die Schaltmuffe 38 befindet sich in der vorderen Stellung S1. Alle übrigen Schaltmuffen befinden sich in einer Neutralstellung N.

Im siebenten Vorwärtsgang G7 verläuft der Drehmomentenpfad über die eingerückte erste Kupplung K1. Die zweite Kupplung K2 ist ausgerückt. Die Schaltmuffe 32 befindet sich in der hinteren Stellung S4. Alle übrigen Schaltmuffen befinden sich in einer Neutralstellung N.

Im ersten Rückwärtsgang R1 verläuft der Drehmomentenpfad über die eingerückte erste Kupplung K1. Die zweite Kupplung K2 ist ausgerückt. Die Schaltmuffe 38 befindet sich in der hinteren Stellung S2. Die Schaltmuffe 28 befindet sich in der hinteren Stellung S6. Die beiden übrigen Schaltmuffen befinden sich in einer Neutralstellung N.

Im zweiten Rückwärtsgang R2 verläuft der Drehmomentenpfad über die eingerückte zweite Kupplung K2. Die erste Kupplung K1 ist ausgerückt. Die Schaltmuffe 24 befindet sich in der hinteren Stellung S8. Die Schaltmuffe 28 befindet sich in der hinteren Stellung S6. Die beiden übrigen Schaltmuffen befinden sich in einer Neutralstellung N.

Im dritten Rückwärtsgang R3 verläuft der Drehmomentenpfad über die eingerückte zweite Kupplung K2. Die erste Kupplung K1 ist ausgerückt. Die Schaltmuffe 32 befindet sich in der vorderen Stellung S3. Die Schaltmuffe 28 befindet sich in der hinteren Stellung S6. Die beiden übrigen Schaltmuffen befinden sich in einer Neutralstellung N.

Somit kann bei diesem Getriebeschema sequentiell zwischen den sieben Vorwärtsgängen G1 bis G7 zugkraftunterbrechungsfrei hin- und zurückgeschaltet werden.

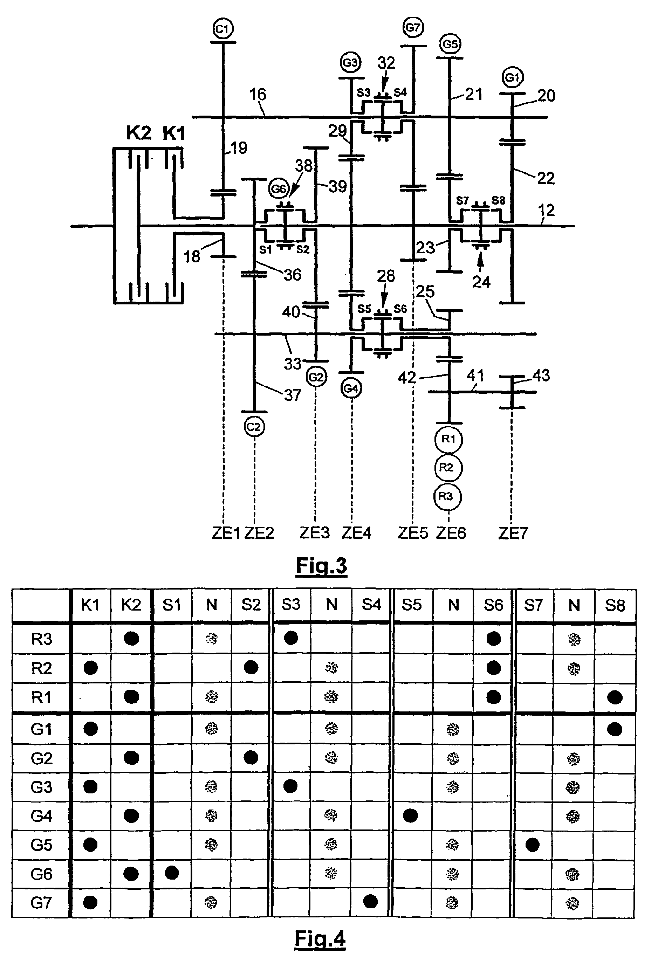

Fig. 3 zeigt in einer zweiten Ausführungsform schematisch ein Getriebeschema eines Doppelkupplungsgetriebes. Im folgenden werden lediglich die Unterschiede zur ersten Ausführungsform beschrieben, da diese lediglich die Rückwärtsgänge R1, R2 und R3 betreffen.

Der Drehmomentenpfad verläuft im ersten Rückwärtsgang R1 ausschließlich über eine untere Vorgelegewelle 33, wohingegen der Drehmomentenpfad im zweiten und dritten Rückwärtsgang R2 und R3 über die beiden Vorgelegewellen 16, 33 verläuft.

Dazu ist anstelle des dem Rückwärtsgang zugeordneten Zwischenrades gemäß erster Ausführungsform eine Umkehrwelle 41 vorgesehen, die parallel versetzt zu der Getriebeausgangswelle 12 und den beiden Vorgelegewellen 16, 33 liegt. Diese Umkehrwelle 41 trägt zwei axial beabstandete Zahnräder 42, 43. Das vordere größere Zahnrad 42 kämmt in der sechsten Zahnradebene ZE6 einerseits mit dem Losrad 25 und andererseits mit dem Losrad 23. Das hintere kleinere Zahnrad 43 kämmt lediglich mit dem in der siebenten Zahnradebene ZE7 liegenden Losrad 22.

Der erste Rückwärtsgang R1 verläuft im Drehmomentenpfad prinzipiell analog zum Drehmomentenpfad des zweiten Rückwärtsganges R2 der ersten Ausführungsform gemäß Fig. 1 und Fig. 2. D.h., im ersten Rückwärtsgang R1 ist die zweite Kupplung K2 eingerückt und die erste Kupplung K1 ausgerückt. Die Schaltmuffe 24 befindet sich in der hinteren Stellung S8. Die Schaltmuffe 28 befindet sich in der hinteren Stellung S6. Die beiden übrigen Schaltmuffen befinden sich in einer Neutralstellung N. Der Drehmomentenpfad verläuft demzufolge über

- die Kupplung K2,
- die zweite Zahnradebene ZE2 der zweiten Getriebekonstanten C2 mit dem Antriebszahnrad 36 und dem Abtriebszahnrad 37,
- die Schaltmuffe 28,
- das Losrad 25,
- das Zahnrad 42
- das Zahnrad 43 und
- das Losrad 22

auf die Getriebeausgangswelle 12.

Im zweiten Rückwärtsgang R2 ist die erste Kupplung K1 eingerückt und die zweite Kupplung K2 ausgerückt. Die Schaltmuffe 38 befindet sich in der hinteren Stellung S2. Die Schaltmuffe 28 befindet sich in der hinteren Stellung S6. Die beiden übrigen Schaltmuffen befinden sich in einer Neutralstellung N. Der Drehmomentenpfad verläuft demzufolge über

- die erste Kupplung K1 und
- die erste Zahnradebene ZE1 der ersten Getriebekonstanten C1 mit dem Antriebszahnrad 18 und dem Abtriebszahnrad 19

auf die Vorgelegewelle 16.

Der Drehmomentenpfad verläuft über das Festrad 20 auf das Losrad 22 und das hintere Zahnrad 43 der Umkehrwelle 41.

Vom Zahnrad 42 verläuft der Drehmomentenpfad über

- das Losrad 25,
- die Schaltmuffe 28,
- die Vorgelegewelle 33,
- das Festrad 40,
- das Losrad 39 und
- die Schaltmuffe 38

auf die Getriebeausgangswelle 12.

Im dritten Rückwärtsgang R3 ist die zweite Kupplung K2 eingerückt und die erste Kupplung K1 ausgerückt. Die Schaltmuffe 32 befindet sich in der vorderen Stellung S3. Die Schaltmuffe 28 befindet sich in der hinteren Stellung S6. Die beiden übrigen Schaltmuffen befinden sich in einer Neutralstellung N. Der Drehmomentenpfad verläuft demzufolge über

- die zweite Kupplung K2 und
- die zweite Zahnradebene ZE2 der zweiten Getriebekonstanten C2 mit dem Antriebszahnrad 36 und dem Abtriebszahnrad 37

auf die Vorgelegewelle 33. Der Drehmomentenpfad verläuft anschließend über die Schaltmuffe 28 in der Stellung S6 auf das Losrad 25 und das mit diesem kämmende Zahnrad 42. Ab hier verläuft der Drehomentenpfad über

- die Umkehrwelle 41,
- das kleinere Zahnrad 43,
- das Losrad 22,
- das Festrad 20,
- die oberer Vorgelegewelle 16,
- das Schaltelement 32,
- das Losrad 29,
- das Festrad 27

auf die Getriebeausgangswelle 12.

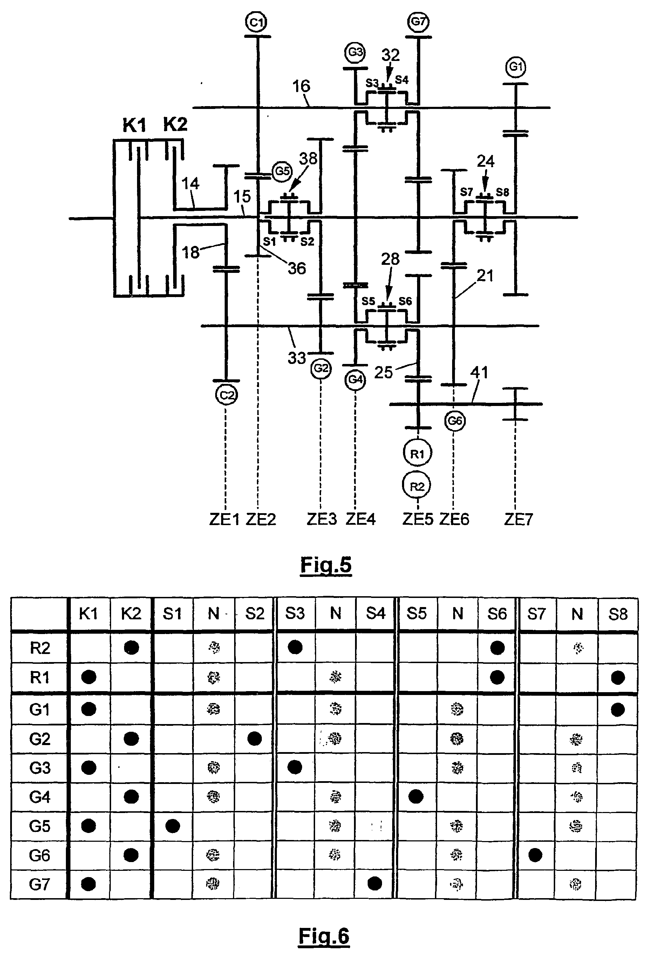

Fig. 5 zeigt in einer dritten Ausführungsform schematisch ein Getriebeschema eines Doppelkupplungsgetriebes. Im folgenden werden lediglich die Unterschiede zur zweiten Ausführungsform gemäß Fig. 3 beschrieben.

Diese Unterschiede betreffen zum einen die beiden gegeneinander ausgetauschten Kupplungen K1 und K2, so dass nunmehr die Kupplung K1 mit der radial inneren Zwischenwelle 15 verbunden ist, wobei deren Antriebszahnrad 36 kleiner ist, als das Antriebszahnrad 18 der Zwischenwelle 14, welche mit der zweiten Kupplung K2 verbunden ist. Das kleine Antriebszahnrad 36 gehört dabei zur ersten Getriebekonstanten C1, wohingegen das große Antriebszahnrad 18 zur zweiten Getriebekonstanten C2 gehört.

Weiteres Unterscheidungsmerkmal zur zweiten und zur ersten Ausführungsform gemäß Fig. 3 und Fig. 1 ist, dass ein in der sechsten Zahnradebene ZE6 auf einer Vorgelegewelle angeordnetes Festrad 21 nicht auf der oberen Vorgelegewelle 16, sondern auf der unteren Vorgelegewelle 33 angeordnet ist. Damit ist das Festrad 21 der sechsten Zahnradebene ZE6 jedoch analog der ersten und der zweiten Ausführungsform auf der Vorgelegewelle angeordnet, welche mit der als Hohlwelle ausgeführten Zwischenwelle 14 unmittelbar kämmt. Das Festrad 21 der sechsten Zahnradebene ZE6 ist jedoch nicht dem fünften Vorwärtsgang G5, sondern dem sechsten Vorwärtsgang G6 zugeordnet. Somit ist bei dieser dritten Ausführungsform der fünfte Vorwärtsgang G5 der direkte Gang. Da die Umkehrwelle 41 entsprechend den beiden anderen Ausführungsformen ebenfalls mit einem Losrad 25 der unteren Vorgelegewelle 33 kämmt, bringt die Verlagerung des Festrades 21 auf die untere Vorgelegewelle eine gegenüber den ersten beiden Ausführungsformen längere Umkehrwelle 41 mit sich.

Gemäß der dritten Ausführungsform sind 2 Rückwärtsgänge R1 und R2 vorgesehen.

Fig. 6 zeigt eine Tabelle der Schaltzustände der Kupplungen K1, K2 und Schaltelemente 38, 32, 28, 24 des Doppelkupplungsgetriebes 10 gemäß Fig. 5.

Im ersten Vorwärtsgang G1 verläuft der Drehmomentenpfad über die eingerückte erste Kupplung K1. Die zweite Kupplung K2 ist ausgerückt. Die Schaltmuffe 24 befindet sich in der hinteren Stellung S8. Alle übrigen Schaltmuffen befinden sich in einer Neutralstellung N.

Im zweiten Vorwärtsgang G2 verläuft der Drehmomentenpfad über die eingerückte zweite Kupplung K2. Die erste Kupplung K1 ist ausgerückt. Die Schaltmuffe 38 befindet sich in der hinteren Stellung S2. Alle übrigen Schaltmuffen befinden sich in einer Neutralstellung N.

Im dritten Vorwärtsgang G3 verläuft der Drehmomentenpfad über die eingerückte erste Kupplung K1. Die zweite Kupplung K2 ist ausgerückt. Die Schaltmuffe 32 befindet sich in der vorderen Stellung S3. Alle übrigen Schaltmuffen befinden sich in einer Neutralstellung N.

Im vierten Vorwärtsgang G4 verläuft der Drehmomentenpfad über die eingerückte zweite Kupplung K2. Die erste Kupplung K1 ist ausgerückt. Die Schaltmuffe 28 befindet sich in der vorderen Stellung S5. Alle übrigen Schaltmuffen befinden sich in einer Neutralstellung N.

Im fünften Vorwärtsgang G5 verläuft der Drehmomentenpfad über die eingerückte erste Kupplung K1. Die zweite Kupplung K2 ist ausgerückt. Die Schaltmuffe 38 befindet sich in der vorderen Stellung S1. Damit ist die Zwischenwelle 15 bzw. die Eingangswelle 11 über den direkten Gang drehfest mit der Getriebeausgangswelle 12 verbunden. Alle übrigen Schaltmuffen befinden sich in einer Neutralstellung N.

Im sechsten Vorwärtsgang G6 verläuft der Drehmomentenpfad über die eingerückte zweite Kupplung K2. Die erste Kupplung K1 ist ausgerückt. Die Schaltmuffe 24 befindet sich in der vorderen Stellung S7. Alle übrigen Schaltmuffen befinden sich in einer Neutralstellung N.

Im siebenten Vorwärtsgang G7 verläuft der Drehmomentenpfad über die eingerückte erste Kupplung K1. Die zweite Kupplung K2 ist ausgerückt. Die Schaltmuffe 32 befindet sich in der hinteren Stellung S4. Alle übrigen Schaltmuffen befinden sich in einer Neutralstellung N.

Im ersten Rückwärtsgang R1 verläuft der Drehmomentenpfad über die eingerückte erste Kupplung K1. Die zweite Kupplung K2 ist ausgerückt. Die Schaltmuffe 24 befindet sich in der hinteren Stellung S8. Die Schaltmuffe 28 befindet sich in der hinteren Stellung S6. Die beiden übrigen Schaltmuffen befinden sich in einer Neutralstellung N.

Im zweiten Rückwärtsgang R2 verläuft der Drehmomentenpfad über die eingerückte zweite Kupplung K2. Die erste Kupplung K1 ist ausgerückt. Die Schaltmuffe 32 befindet sich in der vorderen Stellung S3. Die Schaltmuffe 28 befindet sich in der hinteren Stellung S6. Die beiden übrigen Schaltmuffen befinden sich in einer Neutralstellung N.

Somit kann die diesem Getriebeschema sequentiell zwischen den Vorwärtsgängen zugkraftunterbrechungsfrei geschaltet werden. Der zweite Rückwärtsgang R2 kann insbesondere einem Winterfahrprogramm zugeordnet sein, so dass bei schlechter Bodenhaftung zugkraftunterbrechungsfrei in ein geringeres Rückwärtsfahrtmoment in den zweiten Rückwärtsgang R2 geschaltet wird. Ferner kann der zweite Rückwärtsgang R2 verwendet werden, um höhere Rückwärtsfahrgeschwindigkeiten als im ersten Rückwärtsgang R1 zu erreichen.

Zur Realisierung der Rückwärtsgänge ist es bei dem Getriebe gemäß Fig. 1 erforderlich, das ein Leistungsfluß vom Festrad 21 zum Losrad 25 bzw. umgekehrt stattfinden kann. Hierfür können diese beiden Zahnräder 21, 25 direkt miteinander kämmen, was voraussetzt, dass die betroffenen Wellen 16, 12 33 in der bereits zuvor erläuterten Dreiecksanordnung zueinander positioniert sind. Desweiteren ist es möglich, die besagten Zahnräder 21 u. 25 über das Losrad 23 und ein hier nicht dargestelltes Zwischenzahnrad in Verbindung zu bringen. In diesem Fall ist es möglich, die Wellen 11, 12 , 16 und 33 sowohl in einer Ebene als auch in der besagten Dreiecksanordnung zu positionieren.

Die Anzahl s der (minimal) erforderlichen Schalteinheiten für eine kompakte erfindungsgemäße Ausgestaltung errechnet sich aus einer Anzahl n von Vorwärtsgängen nach folgendem Prinzip:

Ist n ungerade, so ist

$$s = (n + 1)/2,$$

ist n gerade, so ist

$$s = (n+2)/2.$$

Die dargestellten Wellenachsen können in einer Ebene oder aber in einer räumlichen Anordnung, insbesondere in Dreiecksanordnung angeordnet sein.

Die Schaltmuffe kann in sämtlichen Ausführungsformen sowohl als Synchronisiereinrichtung, als auch als Klauenkupplung ausgeführt sein.

Das Doppelkupplungsgetriebe kann alternativ auch mit einem einzigen Rückwärtsgang ausgeführt sein.

Die Schaltmuffen können zur Schaltung sowohl über Schaltgabeln, Schaltschwingen oder aber auch direkt mittels koaxialer Schaltaktuatorik ausgeführt sein, wie diese beispielsweise aus der DE 101 03 664 A1 bekannt ist.

Die besagte Schaltaktuatorik für Schaltgabeln oder Schaltschwingen kann als Schaltwalze mit Nuten ausgeführt sein, wie dies von Motorrädern bekannt ist oder mit einem x-y-Steller ausgeführt sein, der eine rotatorische und eine translatorische Bewegung in eine Schaltwelle, einen Schaltfinger und eine von mehreren parallelen Schaltschienen einleitet.

Bei den beschriebenen Ausführungsformen handelt es sich nur um beispielhafte Ausgestaltungen. Eine Kombination der beschriebenen Merkmale für unterschiedliche Ausführungsformen ist ebenfalls möglich. Weitere, insbesondere nicht beschriebene Merkmale der zur Erfindung gehörenden Vorrichtungteile, sind den in den Zeichnungen dargestellten Geometrien der Vorrichtungteile zu entnehmen.

**Patentansprüche**

1.  Doppelkupplungsgetriebe (10), bei welchem

    - eine Getriebeeingangswelle (11) und eine Getriebeausgangswelle (12) koaxial zueinander und
    - zwei Vorgelegewellen (16, 33) parallel versetzt zueinander und zur Getriebeeingangs (11) und -ausgangswelle (12)

    angeordnet sind,

    - ein direkter Gang vorgesehen ist und ansonsten
    - sämtliche geraden Vorwärtsgänge ausschließlich der einen Vorgelegewelle (33) und
    - sämtliche ungeraden Vorwärtsgänge ausschließlich der anderen Vorgelegewelle (16)

    zugeordnet sind, **dadurch gekennzeichnet, dass** koaxial auf der Getriebeausgangswelle (12) axial versetzt zu einer dem direkten und einem weiteren Vorwärtsgang zugeordneten Schaltmuffe (38) eine weitere zwei Vorwärtsgängen zugeordnete Schaltmuffe (24) angeordnet ist, und wobei axial versetzt zu den beiden besagten Schaltmuffen (38, 24) eine Schaltmuffenebene liegt, in der zwei weitere Schaltmuffen (32, 28) angeordnet sind, von denen jede jeweils einer der beiden Vorgelegewellen (33, 16) zugeordnet ist, wobei jeder Vorwärtsgang mit Ausnahme des direkten Ganges über zwei Zahnradstufen erfolgt.

2. Doppelkupplungsgetriebe nach Patentanspruch 1, **dadurch gekennzeichnet,** **dass** das Doppelkupplungsgetriebe (10) in einem Kraftfahrzeug mit in Fahrtrichtung längs angeordneten Antriebsmotor eingebaut ist und

    - n sequentiell unter Last schaltbare Vorwärtsgänge,
    - zwei koaxial zueinander angeordneten Zwischenwellen (14, 15), von denen eine als Hohlwelle (14) ausgeführt ist, und
    - zwei konzentrisch zu den Zwischenwellen (14, 15) angeordneten Reibkupplungen (K1, K2)

aufweist, wobei alle Vorwärtsgänge jeweils durch Einlegen einer einzigen dem jeweiligen Vorwärtsgang zugeordneten Schaltmuffe betätigt werden und einer dieser Vorwärtsgänge als Direktgang konzipiert ist.

3. Doppelkupplungsgetriebe nach Patentanspruch 2, **dadurch gekennzeichnet**, der Direktgang als Vorwärtsgang n, n-1 oder n-2 ausgeführt ist.

4. Doppelkupplungsgetriebe nach einem der vorhergehenden Patentansprüche, **dadurch gekennzeichnet,** **dass** die Drehrichtungsumkehr im Rückwärtsfahrbetrieb mittels eines zusätzlichen Zwischenrades realisiert wird.

5. Doppelkupplungsgetriebe nach einem der Patentansprüche 1 bis 3, **dadurch gekennzeichnet,** **dass** die Drehrichtungsumkehr im Rückwärtsfahrbetrieb mittels einer zusätzlichen Zwischenwelle (41) realisiert wird.

6. Doppelkupplungsgetriebe nach einem der Patentansprüche 1 bis 3, **dadurch gekennzeichnet,** **dass** die Drehrichtungsumkehr im Rückwärtsbetrieb ausschließlich mittels Zahnrädern realisiert wird, die koaxial zur Eingangs- und Abtriebswelle oder zu den beiden Vorgelegewellen angeordnet sind.

7. Doppelkupplungsgetriebe nach einem der vorhergehenden Patentansprüche, **dadurch gekennzeichnet,** **dass** sich die Anzahl s der im Doppelkupplungsgetriebe verbauten Schaltmuffen aus der Anzahl n der Vorwärtsgänge für eine ungerade Anzahl n aus:

$$s = \frac{n+1}{2},$$

und für eine gerade Anzahl n aus:

$$s = \frac{n+2}{2}$$

errechnet.

8. Doppelkupplungsgetriebe nach einem der vorhergehenden Patentansprüche, **dadurch gekennzeichnet,** **dass** die beiden Vorgelegewellen (16, 33) und die Eingangswelle (11) zumindest näherungsweise in einer Ebene liegen.

9. Doppelkupplungsgetriebe nach einem der vorhergehenden Patentansprüche, **dadurch gekennzeichnet,** **dass** bei dem die beiden Vorgelegewellen (16, 33) und die Eingangswelle (11) in Dreiecksform angeordnet sind.

10. Doppelkupplungsgetriebe nach einem der vorhergehenden Patentansprüche, **dadurch gekennzeichnet,** **dass** mindestens ein Zahnrad in unterschiedlichen Gangstufen im Drehmomentenpfad liegt.

11. Doppelkupplungsgetriebe nach einem der vorhergehenden Patentansprüche, **dadurch gekennzeichnet**, der erste Vorwärtsgang (G1) und ein Rückwärtsgang (R1) derart angeordnet sind, dass zum wechselweisen Hin- und Herschalten zwischen dem ersten Vorwärtsgang und diesem Rückwärtsgang allein ein wechselweises Betätigen der eingangsseitigen Kupplungen (K1 bzw. K2) ohne Betätigung einer Schaltemuffe erforderlich ist.

12. Doppelkupplungsgetriebe nach Patentanspruch 11, **dadurch gekennzeichnet,** **dass** dieser besagte Rückwärtsgang zum wechselweisen Hin- und Herschalten mit dem ersten Vorwärtsgang der erste Rückwärtsgang (R1) ist.

**Claims**

1. Twin clutch transmission (10), wherein

   - a transmission input shaft (11) and a transmission output shaft (12) are arranged coaxially relative to one another and
   - two layshafts (16, 33) are arranged with a parallel offset relative to one another and to the transmission input shaft (11) and the transmission output shaft (12),
   - a direct drive is provided and otherwise
   - all even-numbered forward gears are exclusively assigned to one layshaft (33) and
   - all odd-numbered forward gears are exclusively allocated to the other layshaft (16),

   **characterised in that**, coaxially located on the transmission output shaft (12) with axial offset relative to a selector sleeve (38) assigned to the direct drive and a further forward gear, a further selector sleeve (24) assigned to two forward gears is provided and **in that**, with axial offset relative to the said two selector sleeves (38, 24), there is a selector sleeve plane wherein two further selector sleeves (32, 28) are located, each of which is assigned to one of the two layshafts (33, 16), each forward gear with the exception of the direct drive being driven via two gear stages.

2. Twin clutch transmission according to patent claim 1, **characterised in that** the twin clutch transmission (10) is installed in a motor vehicle with a longitudinally mounted engine and comprises

   - n forward gears changeable sequentially under load,
   - two coaxially arranged layshafts (14, 15), one of which is designed as a hollow shaft (14), and two friction clutches (K1, K2) arranged concentric with the layshafts (14, 15),

   wherein all forwards gears are selected by engaging a single selector sleeve assigned to the forward gear to be selected, and wherein one of these forward gears is designed as a direct drive.

3. Twin clutch transmission according to patent claim 2, **characterised in that** the direct drive is designed as forward gear n, n-1 or n-2.

4. Twin clutch transmission according to any of the preceding patent claims, **characterised in that** the reversal of the direction of rotation in the reverse mode is based on an additional intermediate gear.

5. Twin clutch transmission according to any of patent claims 1 to 3, **characterised in that** the reversal of the direction of rotation in the reverse mode is based on an additional layshaft (41).

6. Twin clutch transmission according to any of patent claims 1 to 3, **characterised in that** the reversal of the direction of rotation in the reverse mode is exclusively based on gears coaxial with the input and output shafts or with the two layshafts.

7. Twin clutch transmission according to any of the preceding patent claims, **characterised in that** the number s of the selector sleeves installed in the twin clutch transmission is calculated from the number n of the forward gears from

$$s = \frac{n+1}{2}$$

for an odd number n and from

$$s = \frac{n+2}{2} \; .$$

for an even number n.

8. Twin clutch transmission according to any of the preceding patent claims, **characterised in that** the two layshafts (16, 33) and the input shaft (11) are at least approximately located in one plane.

9. Twin clutch transmission according to any of the preceding patent claims, **characterised in that** the two layshafts (16, 33) and the input shaft (11) are arranged in a triangular configuration.

10. Twin clutch transmission according to any of the preceding patent claims, **characterised in that** at least one gear is located in different gear stages in the torque path.

11. Twin clutch transmission according to any of the preceding patent claims, **characterised in that** the first forward gear (G1) and one reverse gear (R1) are arranged such that, for the alternate selection of the first forward gear and the said reverse gear, only the input-side clutches (K1 or K2 respectively) have to be actuated without actuating a selector sleeve.

**12.** Twin clutch transmission according to patent claim 11,
**characterised in that**
the said reverse gear designed for alternate selection with the first forward gear is the first reverse gear (R1).

## Revendications

**1.** Boîte de vitesses à double embrayage (10), dans laquelle

- un arbre d'entrée de boîte (11) et un arbre de sortie de boîte (12) sont agencés coaxiaux l'un à l'autre, et
- deux arbres intermédiaires (16, 33) sont agencés parallèlement en décalage l'un par rapport à l'autre ainsi que par rapport à l'arbre d'entrée de boîte (11) et à l'arbre de sortie de boîte (12),
- il est prévu une vitesse directe, et par ailleurs
- la totalité des vitesses paires en marche avant sont associées exclusivement à l'un des arbres intermédiaires (33), et
- la totalité des vitesses impaires en marche avant sont associées exclusivement à l'autre des arbres intermédiaires (16),

**caractérisée en ce que**, coaxialement sur l'arbre de sortie de boîte (12) et axialement en décalage à un manchon de commande (38) associé à la vitesse directe et à une autre vitesse en marche avant, est agencé un autre manchon de commande (24) associé à deux vitesses en marche avant et, en décalage axial par rapport au deux manchons de commande précités (38, 24), est disposé un plan de manchons de commande dans lequel sont agencés deux autres manchons de commande (32, 28) dont chacun est associé respectivement à l'un des deux arbres intermédiaires (33, 16), et chaque vitesse en marche avant, à l'exception de la vitesse directe, a lieu via deux étages d'engrenages.

**2.** Boîte de vitesses à double embrayage selon la revendication 1,
**caractérisée en ce que** la boîte de vitesses à double embrayage (10) est intégrée dans un véhicule automobile avec moteur d'entraînement agencé le long de la direction de circulation, et présente :

- n vitesses en marche avant susceptibles d'être commutées séquentiellement sous charge,
- deux arbres intermédiaires (14, 15) agencés coaxialement l'un par rapport l'autre, dont l'un est réalisé comme arbre creux (14), et
- deux embrayages à friction (K1, K2) agencés concentriquement aux arbres intermédiaires (14, 15),

toutes les vitesses en marche avant sont actionnées par engagement d'un unique de manchon de commande associé à la vitesse respective en marche avant, et l'une de ces vitesses en marche avant est conçue comme vitesse directe.

**3.** Boîte de vitesses à double embrayage selon la revendication 2,
**caractérisée en ce que** la vitesse directe est réalisée à titre de vitesse en marche avant n, n - 1 ou n - 2.

**4.** Boîtes de vitesses à double embrayage selon l'une des revendications précédentes,
**caractérisée en ce que** l'inversion du sens de rotation lors de la circulation en marche arrière est réalisée au moyen d'une roue intermédiaire additionnelle.

**5.** Boîtes de vitesses à double embrayage selon l'une des revendications 1 à 3,
**caractérisée en ce que** l'inversion du sens de rotation lors de la circulation en marche arrière est réalisée au moyen d'un arbre intermédiaire additionnel (41).

**6.** Boîtes de vitesses à double embrayage selon l'une des revendications 1 à 3,
**caractérisée en ce que** l'inversion du sens de rotation lors de la circulation en marche arrière est réalisée exclusivement au moyen d'engrenages qui sont agencés coaxialement à l'arbre d'entrée et à l'arbre de sortie ou aux deux arbres intermédiaires.

**7.** Boîte de vitesses à double embrayage selon l'une des revendications précédentes,
**caractérisée en ce que** le nombre s des manchons de commutation intégrés dans la boîte de vitesses est calculé, à partir du nombre n des vitesses en marche avant, par l'équation :

$$s = (n + 1)/2$$

pour un nombre n impair, et par l'équation :

$$s = (n + 2)/2$$

pour un nombre n pair.

**8.** Boîte de vitesses à double embrayage selon l'une des revendications précédentes,
**caractérisée en ce que** les deux arbres intermédiaires (16, 33) et l'arbre d'entrée (11) sont situés au moins approximativement dans un plan.

9. Boîte de vitesses à double embrayage selon l'une des revendications précédentes,
**caractérisée en ce que** les deux arbres intermédiaires (16, 33) et l'arbre d'entrée (11) sont agencés en formant un triangle.

10. Boîte de vitesses à double embrayage selon l'une des revendications précédentes,
**caractérisée en ce qu'**un engrenage au moins se trouve dans le trajet du couple de rotation dans des vitesses différentes.

11. Boîte de vitesses à double embrayage selon l'une des revendications précédentes,
**caractérisée en ce que** la première vitesse en marche avant (G1) et une vitesse en marche arrière (R1) sont agencées de telle façon que pour passer alternativement entre la première vitesse en marche avant et cette vitesse en marche arrière seul un actionnement alternatif des embrayages côté entrée (K1 ou K2) est nécessaire sans actionnement d'un manchon de commande.

12. Boîte de vitesses à double embrayage selon la revendication 11,
**caractérisée en ce que** ladite vitesse en marche arrière destinée à être commutée alternativement avec la première vitesse en marche avant est la première vitesse en marche arrière (R1).

**Fig.1**

|     | K1 | K2 | S1 | N | S2 | S3 | N | S4 | S5 | N | S6 | S7 | N | S8 |
|-----|----|----|----|---|----|----|---|----|----|---|----|----|---|----|
| R3  |    | ●  |    |   |    | ●  |   |    |    |   | ●  |    |   |    |
| R2  |    | ●  |    |   |    |    |   |    |    |   | ●  |    |   | ●  |
| R1  | ●  |    |    |   | ●  |    |   |    |    |   | ●  |    |   |    |
| G1  | ●  |    |    |   |    |    |   |    |    |   |    |    |   | ●  |
| G2  |    | ●  |    |   | ●  |    |   |    |    |   |    |    |   |    |
| G3  | ●  |    |    |   |    | ●  |   |    |    |   |    |    |   |    |
| G4  |    | ●  |    |   |    |    |   |    | ●  |   |    |    |   |    |
| G5  | ●  |    |    |   |    |    |   |    |    |   |    | ●  |   |    |
| G6  |    | ●  | ●  |   |    |    |   |    |    |   |    |    |   |    |
| G7  | ●  |    |    |   |    |    |   | ●  |    |   |    |    |   |    |

**Fig.2**

**Fig.3**

| | K1 | K2 | S1 | N | S2 | S3 | N | S4 | S5 | N | S6 | S7 | N | S8 |
|---|---|---|---|---|---|---|---|---|---|---|---|---|---|---|
| R3 | | ● | | ◌ | | ● | | | | | ● | | ◌ | |
| R2 | ● | | | | ● | | ◌ | | | | ● | | ◌ | |
| R1 | · | ● | | ◌ | | | ◌ | | | | ● | | | ● |
| G1 | ● | | | ◌ | | | ◌ | | | ◌ | | | | ● |
| G2 | | ● | | | ● | | ◌ | | | ◌ | | | ◌ | |
| G3 | ● | | | ◌ | | ● | | | | ◌ | | | ◌ | |
| G4 | | ● | | ◌ | | | ◌ | | ● | | | | ◌ | |
| G5 | ● | | | ◌ | | | ◌ | | | ◌ | | ● | | |
| G6 | | ● | ● | | | | ◌ | | | ◌ | | | ◌ | |
| G7 | ● | | | ◌ | | | | ● | | ◌ | | | ◌ | |

**Fig.4**

**Fig.5**

| | K1 | K2 | S1 | N | S2 | S3 | N | S4 | S5 | N | S6 | S7 | N | S8 |
|---|---|---|---|---|---|---|---|---|---|---|---|---|---|---|
| R2 | | ● | | ● | | ● | | | | | ● | | ● | |
| R1 | ● | | | ● | | | ● | | | | ● | | | ● |
| G1 | ● | | | ● | | | ● | | | ● | | | | ● |
| G2 | | ● | | | ● | | ● | | | ● | | | ● | |
| G3 | ● | | | ● | | ● | | | | ● | | | ● | |
| G4 | | ● | | ● | | | ● | | ● | | | | ● | |
| G5 | ● | | ● | | | | ● | | | ● | | | ● | |
| G6 | | ● | | ● | | | ● | | | ● | | ● | | |
| G7 | ● | | | ● | | | | ● | | ● | | | ● | |

**Fig.6**

15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0278938 A
- DE 10102028 A1
- DE 3131156 A1
- DE 10325647
- EP 1141580 A1
- DE 19939334 A1
- EP 1321327 A2
- DE 10103664 A1